# EUROPEAN PATENT SPECIFICATION

(11) **EP 3 452 315 B1**
(45) Date of publication and mention of the grant of the patent: **12.01.2022**
(21) Application number: 17723212.1
(22) Date of filing: 02.05.2017
(51) Int. Cl.: B60H 1/00, B60H 1/32, F02M 21/02, F02M 21/06, F25B 19/00, B60P 3/20

(54) **INTEGRATED COMPRESSED GAS TRANSPORT REFRIGERATION UNIT FOR COMPRESSED GAS FUELED VEHICLES**
INTEGRIERTE DRUCKGASTRANSPORTKÜHLEINHEIT FÜR DRUCKGASBETRIEBENE FAHRZEUGE
UNITÉ DE RÉFRIGÉRATION DE TRANSPORT DE GAZ COMPRIMÉ INTÉGRÉE POUR VÉHICULES ALIMENTÉS EN GAZ COMPRIMÉ

(30) Priority: 03.05.2016 US 201662330971 P
(43) Date of publication of application: 13.03.2019
(73) Proprietor: Carrier Corporation, Farmington, CT 06032 (US)
(72) Inventor: POOLMAN, Ciara, Syracuse New York 13057 (US); CHOPKO, Robert A., Baldwinsville, NY 13027 (US)
(74) Representative: Schmitt-Nilson Schraud Waibel Wohlfrom Patentanwälte Partnerschaft mbB
(86) International application number: PCT/US2017/030615
(87) International publication number: WO 2017/192570

(56) References cited:
- WO-A1-2015/011581
- CN-B- 103 496 311
- CN-U- 201 907 386
- DE-A1- 19 531 122
- GB-A- 2 182 766
- JP-Y1- S 417 284
- US-A- 2 835 333

## Description

### BACKGROUND OF THE DISCLOSURE

The embodiments herein generally relate to transport refrigeration systems and more specifically, the transport refrigeration systems powered by compressed gas.

Typically, cold chain distribution systems are used to transport and distribute cargo, or more specifically perishable goods and environmentally sensitive goods (herein referred to as perishable goods) that may be susceptible to temperature, humidity, and other environmental factors. Perishable goods may include but are not limited to fruits, vegetables, grains, beans, nuts, eggs, dairy, seed, flowers, meat, poultry, fish, ice, and pharmaceuticals. Advantageously, cold chain distribution systems allow perishable goods to be effectively transported and distributed without damage or other undesirable effects.

Refrigerated vehicles and trailers are commonly used to transport perishable goods in a cold chain distribution system. A transport refrigeration system is mounted to the vehicles or to the trailer in operative association with a cargo space defined within the vehicles or trailer for maintaining a controlled temperature environment within the cargo space.

Conventionally, transport refrigeration systems used in connection with refrigerated vehicles and refrigerated trailers include a transport refrigeration unit having a refrigerant compressor, a condenser with one or more associated condenser fans, an expansion device, and an evaporator with one or more associated evaporator fans, which are connected via appropriate refrigerant lines in a closed refrigerant flow circuit. Air or an air/gas mixture is drawn from the interior volume of the cargo space by means of the evaporator fan(s) associated with the evaporator, passed through the airside of the evaporator in heat exchange relationship with refrigerant whereby the refrigerant absorbs heat from the air, thereby cooling the air. The cooled air is then supplied back to the cargo space.

Developing countries often do not have large refrigerated vehicles with refrigerated trailers due to either lack of infrastructure or crowded urban environments that simply cannot fit such large vehicles. Often perishable goods are delivered by auto rickshaws or small trucks that are powered by a compressed gas, such as for example, compressed natural gas or propane. Auto rickshaws are typically three-wheeler vehicles with enough room for a driver in the front in a few passengers and/or cargo in the back. Such auto rickshaws often serve as a primary means of transportation in many developing countries. For example, auto rickshaws may include vehicles such as tuk-tuks. The small size of a tuk-tuk makes it an ideal vehicle to maneuver through crowded narrow streets, however most tuk-tuks lack refrigeration systems. The tuk-tuk is typically too small and lacks the power to carry or drive a refrigeration system having a large compressor, thus a smaller refrigeration system is desired.

DE 195 31 122 A1 shows a lorry for transporting fresh produce, and has an engine which can be driven by a gaseous cryogenic fuel. It has a transportation space which can be cooled, and this is achieved preferably using the same gas. The gas is stored in an insulated tank which is connected by a pipe to refrigeration equipment which is linked to the transportation space. The equipment may be connected by a pipe to the engine, and this pipe may also be connected to the tank. The equipment may have a heat exchanger which the low-temperature gas flows through.

CN 103 496 311 B shows a cooling circuit comprising an LNG tank connected to an engine via a pressure valve. The LNG tank can be coupled to a gasifier prior to the pressure valve, or sequentially to an evaporator, to the gasifier, to the pressure valve and to the engine.

JP S41 7284 Y1 shows a truck having a refrigerated cargo space. A heat exchanger is located on a ceiling inside the refrigerated cargo space. It appears that an LPG tank provides LPG to the heat exchanger as well as to an engine. An opening/closing valve is positioned in the LPG line between the LPG tank and the heat exchanger.

WO 2015/911581 A1 shows a vehicle having an LNG tank coupled to a power system, a combustion engine being connected to the LNG tank, and a cooling device positioned inside a heat-insulated compartment.

CN 201 907 386 U shows a vehicle having a gas storage tank connected to a cold storage tank and to an engine via a conduit.

### BRIEF DESCRIPTION OF THE DISCLOSURE

According to one embodiment, a transport refrigeration system is provided comprising the features of claim 1. The transport refrigeration system comprises a vehicle having a refrigerated cargo space; a compressed gas tank configured to store gas; an engine configured to power the vehicle through combustion of the gas; and a pressure reducing mechanism fluidly connecting the compressed gas tank and the engine. The pressure reducing mechanism configured to reduce the pressure of the gas from the compressed gas tank. The transport refrigeration system also comprises an evaporator thermally coupled to the pressure reducing mechanism and the refrigerated cargo space. The evaporator is configured to cool the refrigerated cargo space. A temperature of the gas and a temperature of the evaporator are reduced as a result of the reduction in pressure of the gas by the pressure reducing mechanism. The pressure reducing mechanism is composed of an ejector system, the ejector system comprising an ejector fluidly connected to the compressed gas tank and a flash tank fluidly connected to the evaporator and the engine.

In addition to one or more of the features described above, or as an alternative, further embodiments of the transport refrigeration system may include that the evaporator includes an evaporator inlet and an evaporator outlet. The flash tank being fluidly connected to the inlet of the evaporator. The ejector includes an ejector inlet and an ejector outlet. The compressed gas tank and the evaporator outlet being fluidly connected to the ejector inlet. The ejector outlet is fluidly connected to the flash tank.

In addition to one or more of the features described above, or as an alternative, further embodiments of the transport refrigeration system may include a fan configured to operatively pass air across the evaporator and into the refrigerated cargo space.

In addition to one or more of the features described above, or as an alternative, further embodiments of the transport refrigeration system may include that the gas is natural gas.

In addition to one or more of the features described above, or as an alternative, further embodiments of the transport refrigeration system may include that the gas is propane.

According to another embodiment, a method of operating a transport refrigeration system is provided including the features of claim 7.

In addition to one or more of the features described above, or as an alternative, further embodiments of the method may include that the evaporator includes an evaporator inlet and an evaporator outlet. The flash tank being fluidly connected to the inlet of the evaporator. The ejector includes an ejector inlet and an ejector outlet. The compressed gas tank and the evaporator outlet being fluidly connected to the ejector inlet. The ejector outlet is fluidly connected to the flash tank.

In addition to one or more of the features described above, or as an alternative, further embodiments of the method may include that the flash tank provides liquid gas to the evaporator inlet and vapor gas to the engine.

In addition to one or more of the features described above, or as an alternative, further embodiments of the method may include operatively passing, using a fan, air across the evaporator and into the refrigerated cargo space.

In addition to one or more of the features described above, or as an alternative, further embodiments of the method may include that the gas is natural gas.

In addition to one or more of the features described above, or as an alternative, further embodiments of the method may include that the gas is propane.

Technical effects of embodiments of the present disclosure providing cooling to a refrigerated container through the decompression of compressed gas and using the decompressed gas to fuel an engine to power a vehicle.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The subject matter which is regarded as the disclosure is particularly pointed out and distinctly claimed in the claims at the conclusion of the specification. The foregoing and other features and advantages of the disclosure are apparent from the following detailed description taken in conjunction with the accompanying drawings in which:
FIG. 1 is a schematic illustration of a transport refrigeration system incorporated on an auto rickshaw or small truck, according to an embodiment of the present disclosure, which however is not part of the invention;
FIG. 2 is an enlarged schematic illustration of the transport refrigeration system of FIG. 1, according to an embodiment of the present disclosure, which however is not part of the invention;
FIG. 3 is a schematic illustration of a transport refrigeration system incorporated on an auto rickshaw or small truck, according to an embodiment of the present invention; and
FIG. 4 is an enlarged schematic illustration of the transport refrigeration system of FIG. 3, according to an embodiment of the present invention.

### DETAILED DESCRIPTION OF THE DISCLOSURE

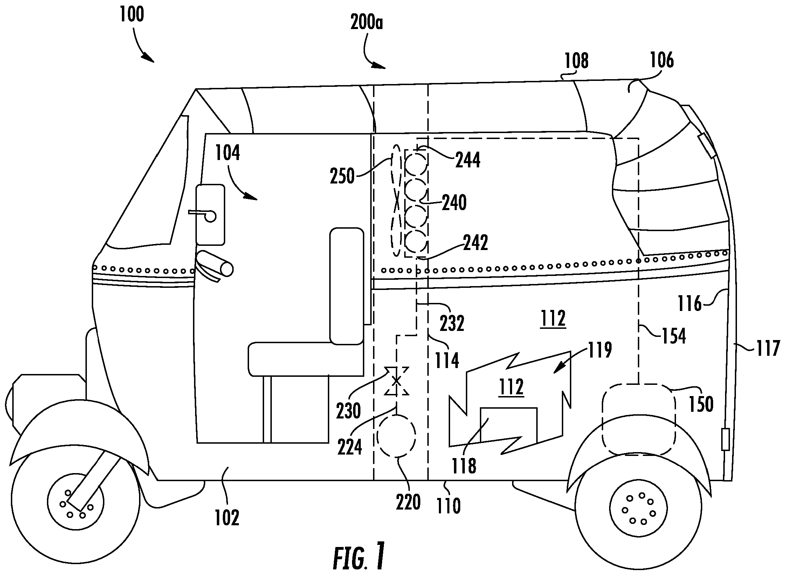

Referring to FIGs. 1-4. FIG. 1 shows a schematic illustration of a transport refrigeration system 200a incorporated on an auto rickshaw 102, according to an embodiment of the present disclosure, which however is not part of the invention.

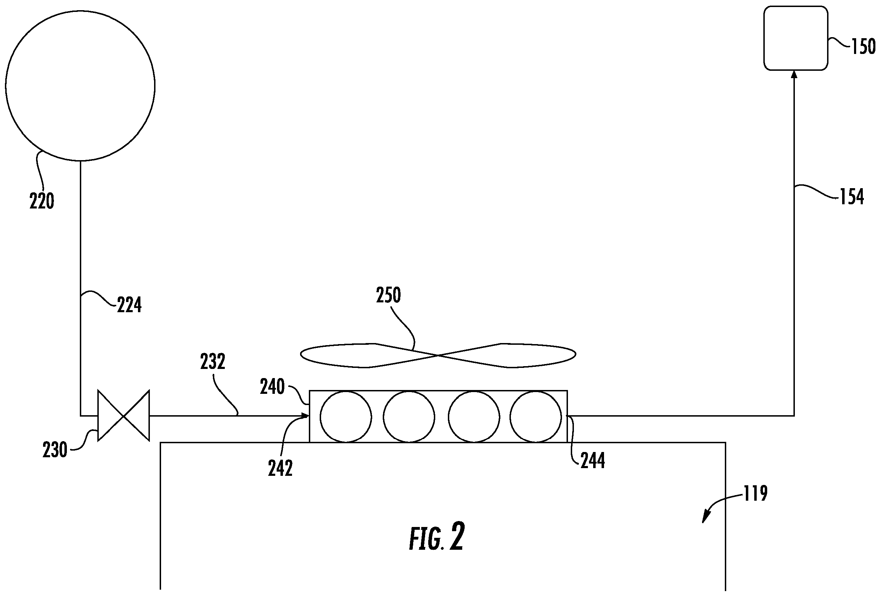

FIG. 2 shows an enlarged schematic illustration of the transport refrigeration system 200a of FIG. 1, according to an embodiment of the present disclosure, which however is not part of the invention.

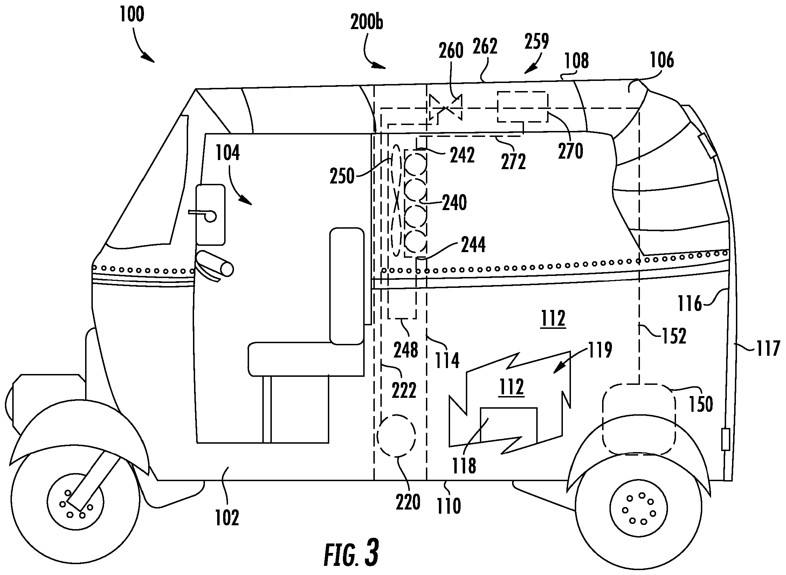

FIG. 3 shows a schematic illustration of a transport refrigeration system 200b incorporated on an auto rickshaw 102, according to an embodiment of the present invention.

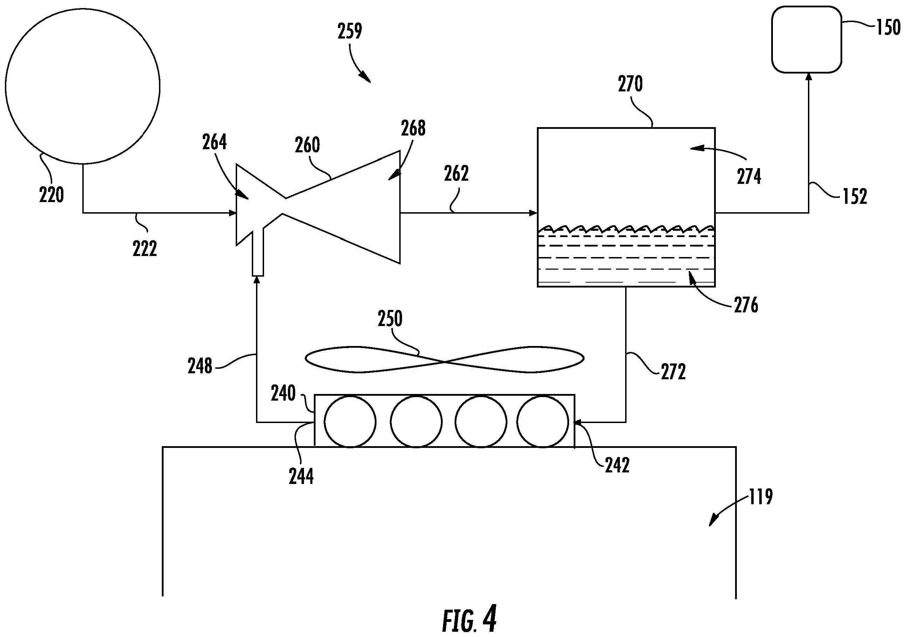

FIG. 4 shows an enlarged schematic illustration of the transport refrigeration system 200b of FIG. 3, according to an embodiment of the present invention.

The transport refrigeration system 200a of FIGs. 1-2 is being illustrated as a small vehicle refrigeration system 100, as seen in FIG. 1. The small vehicle refrigeration system 100 includes a vehicle 102 having a transport container 106. In an embodiment, the vehicle 102 may be a small truck or an auto rickshaw such as, for example a tuk-tuk. The vehicle 102 includes an operator's compartment or cab 104 and an engine 150 which acts as the drive system of the small vehicle refrigeration system 100. The transport container 106 is coupled to the vehicle 102. The transport container 106 is a refrigerated trailer and includes a top wall 108, a directly opposed bottom wall 110, opposed side walls 112, and a front wall 114, with the front wall 114 being closest to the vehicle 102. The transport container 106 further includes a door or doors 117 at a rear wall 116, opposite the front wall 114. The walls of the transport container 106 define a refrigerated cargo space 119, as shown in FIGs. 1 and 3.

The gas (i.e. fuel) that powers the engine 150 may be a pressurized gas, for example such as compressed natural gas, propane, or any other pressurized gas known to one of skill in the art. In an embodiment, the gas is compressed natural gas. In another embodiment, the gas is propane. In the illustrated embodiment, the compressed gas to power the engine 150 of the vehicle 102 is stored in a compressed gas tank 220. The engine 150 may be configured to power the vehicle 102 through combustion of the gas.

Transport refrigeration systems 200a and transport refrigeration systems 200b may be used to transport and distribute perishable goods and environmentally sensitive goods (herein referred to as perishable goods 118). The perishable goods 118 may include but are not limited to fruits, vegetables, grains, beans, nuts, eggs, dairy, seed, flowers, meat, poultry, fish, ice, blood, pharmaceuticals, or any other suitable cargo requiring refrigerated transport. The perishable goods 118 are stored in the refrigerated cargo space 119, as seen in FIGs. 1 and 3.

The transport refrigeration system 200a of FIGs. 1 and 2 comprises: a compressed gas tank 220; an expansion device 230 fluidly connected to the compressed gas tank 220, an evaporator 240 fluidly connected to the expansion device 230; and an engine 150 fluidly connected to the evaporator 240. The compressed gas tank 220 is configured to store compressed gas. The expansion device 230 is fluidly connected to the compressed gas tank 220 through a tank line 224. The evaporator 240 is fluidly connected to the expansion device 230 at the evaporator inlet 242 through an evaporator line 232. The engine 150 is fluidly connected to the evaporator 240 at the evaporator outlet 244 through engine line 154. In an embodiment, the evaporator 240 is thermally coupled to the expansion device 230 and the refrigerated cargo space 119.

The gas from the compressed gas tank 220 must then be decompressed to a low pressure to be consumable by the engine 150. For instance, commonly many tanks store compressed natural gas at around 3600 PSI and then the compressed natural gas must be decompressed to less than about 100 PSI for viable use in natural gas engines. The expansion device 230 is configured to depressurize the compressed gas from the compressed gas tank 220 to an operable pressure suitable for consumption by the engine 150. The expansion device 230 may be composed of a single expansion device or a series of multiple expansion devices. Heat is released during the compression process of the gas, while conversely heat is absorbed during the decompression process. So the decompression process through the expansion device 230 will lower the temperature of the gas and subsequently the evaporator 240 temperature as well. Thus, reduced temperature of the evaporator 240 provides cooling to the refrigerated cargo space 119. The cooling may be provided to the refrigerated cargo space 119 through thermal conduction or convection. The transport refrigeration system 200a may include a fan 250 to aid in the convection cooling process. The fan 250 is operative to pass air across the evaporator 240 and cool the refrigerated cargo space 119. The fan 250 may be powered by various methods including but not limited to a battery, a generator, and/or solar panels. The fan may also be spun by a turbine powered by the flow and/or decompression of the gas from the compressed gas tank 220.

The transport refrigeration system 200b of FIGs. 3-4 is similar to the transport refrigeration system 200a of FIGs. 1-2; however the expansion device 230 of FIGs. 1-2 is replaced by an ejector system 259 in FIGs. 3-4. The transport refrigeration system 200b of FIGs. 3 and 4 comprises: a compressed gas tank 220; an ejector 260 fluidly connected to the compressed gas tank 220, a flash tank 270 fluidly connected to the ejector 260, an evaporator 240 fluidly connected to the flash tank 270 and fluidly connected to the ejector 260; and an engine 150 fluidly connected to the flash tank 270. The compressed gas tank 220 is configured to store compressed gas. In an embodiment, the evaporator 240 is thermally coupled to the ejector system 259 and the refrigerated cargo space 119.

The ejector 260 includes an ejector inlet 264 and an ejector outlet 268. The ejector inlet 264 of the ejector 260 is fluidly connected to the compressed gas tank 220 through a tank line 222. The flash tank 270 is fluidly connected to the ejector outlet 268 of the ejector through an ejector line 262. The evaporator 240 includes an evaporator inlet 242 and an evaporator outlet 244. The evaporator inlet 242 of the evaporator 240 is fluidly connected to the flash tank 270 to the through a liquid line 272. The evaporator outlet 244 of the evaporator 240 is fluidly connected to the ejector inlet 264 of the ejector 260 through the ejector return line 248. The engine 150 is fluidly connected to the flash tank 270 through a vapor engine line 152.

The ejector system 259 is composed of the ejector 260 and the flash tank 270. Both the expansion device 230 and the ejector system 259 serve as a pressure reducing mechanism configured to reduce the pressure of the gas but accomplish the pressure reduction in different ways. The expansion device 230 of FIGs. 1-2 may be a valve or a series of valves that serve to reduce the pressure of the gas. Whereas the ejector 260 of FIGs. 3-4 reduces the pressure of the compressed gas and separates the gas into a liquid 276 and a vapor 274, both cooled from the decompression process in the ejector. The cooled liquid 276 will travel through the evaporator 240 to cool 240 and thus cool the refrigerated cargo space 119 as well. Once through the evaporator 240 and out the evaporator outlet 244, the liquid 276 will re-enter the ejector inlet 262 and travel through the ejector 260 again, as shown in FIGs. 3 and 4. The vapor 274 will travel to the engine 150 to be consumed.

The decompression process through the ejector 260 will lower the temperature of the gas and subsequently the evaporator 240 temperature as well. Thus, a reduced temperature of the evaporator 240 provides cooling to the refrigerated cargo space 119. The cooling may be provided to the refrigerated cargo space 119 through thermal conduction or convection. The transport refrigeration system 200b may include a fan 250 to aid in the convection cooling process. The fan 250 is operative to pass air across the evaporator 240 and cool the refrigerated cargo space 119. The fan 250 may be powered by various methods including but not limited to a battery, a generator, and/or solar panels. The fan may also be spun by a turbine powered by the flow and/or decompression of the gas from the compressed gas tank 220.

The transport refrigeration system 200a and the transport refrigeration system 200b may also include a controller (not shown) configured for controlling operation of the transport refrigeration system 200 including, but not limited to, operation of various components of the refrigerant unit 22 to provide and maintain a desired thermal environment within the refrigerated cargo space 119. The controller may also be able to selectively control the release of compressed gas from the compressed gas tank 220. The release of gas may be based on the requirements of the engine 150 and the transport refrigeration system (transport refrigeration system 200a or 200b). The controller may be an electronic controller including a processor and an associated memory comprising computer-executable instructions that, when executed by the processor, cause the processor to perform various operations. The a processor may be but is not limited to a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory may be a storage device such as, for example, a random access memory (RAM), read only memory (ROM), or other electronic, optical, magnetic or any other computer readable medium.

Advantageously, using the decompression process of compressed gas provides cooling to a refrigerated cargo space, while avoiding the complexity and large volumetric requirements of a compressor based refrigeration system.

The invention is not to be seen as limited by the foregoing description, but is only limited by the scope of the appended claims.

## Claims

1. A transport refrigeration system (200b) comprising:
a vehicle (102) having a refrigerated cargo space (119);
a compressed gas tank (220) configured to store gas;
an engine (150) configured to power the vehicle (102) through combustion of the gas;
a pressure reducing mechanism fluidly connecting the compressed gas tank (220) and the engine (150), the pressure reducing mechanism configured to reduce the pressure of the gas from the compressed gas tank (220);
an evaporator (240) thermally coupled to the pressure reducing mechanism and the refrigerated cargo space (119);
wherein the evaporator (240) is configured to cool the refrigerated cargo space (119); and
wherein a temperature of the gas and a temperature of the evaporator (240) are reduced as a result of the reduction in pressure of the gas by the pressure reducing mechanism;
**characterized in that**
the pressure reducing mechanism is composed of an ejector system (259), the ejector system (259) comprising an ejector (260) fluidly connected to the compressed gas tank (220) and a flash tank (270) fluidly connected to the evaporator (240) and the engine (150).

2. The transport refrigeration system (200b) of claim 1, wherein:
the evaporator (240) includes an evaporator inlet (242) and an evaporator outlet (244), the flash tank (270) being fluidly connected to the inlet (242) of the evaporator (240); and
the ejector (260) includes an ejector inlet (264) and an ejector outlet (268), the compressed gas tank (220) and the evaporator outlet (244) being fluidly connected to the ejector inlet (264), wherein the ejector outlet (268) is fluidly connected to the flash tank (270).

3. The transport refrigeration system (200b) of claim 2, wherein:
the flash tank (270) provides liquid gas to the evaporator inlet (242) and vapor gas to the engine (150).

4. The transport refrigeration system (200b) of claim 1, further comprising:
a fan (250) configured to operatively pass air across the evaporator (240) and into the refrigerated cargo space (119).

5. The transport refrigeration system (200b) of claim 1, wherein:
the gas is natural gas.

6. The transport refrigeration system (200b) of claim 1, wherein:
the gas is propane.

7. A method of operating a transport refrigeration system (200b), the method comprising:
storing gas in a compressed gas tank (220);
powering a vehicle (102) using an engine (150) fluidly connected to the compressed gas tank (220) through a pressure reducing mechanism, the pressure reducing mechanism configured to reduce the pressure of the gas from the compressed gas tank (220);
cooling a refrigerated cargo space (119) using an evaporator (240) thermally coupled to the pressure reducing mechanism and the refrigerated cargo space (119); and
wherein a temperature of the gas and a temperature of the evaporator (240) are reduced as a result of the reduction in pressure of the gas by the pressure reducing mechanism;
**characterized in that**
the pressure reducing mechanism is composed of an ejector system (259), the ejector system (259) comprising an ejector (260) fluidly connected to the compressed gas tank (220) and a flash tank (270) fluidly connected to the evaporator (240) and the engine (150).

8. The method of claim 7, wherein:
the evaporator (240) includes an evaporator inlet (242) and an evaporator outlet (244), the flash tank (270) being fluidly connected to the inlet of the evaporator (240); and
the ejector (260) includes an ejector inlet (264) and an ejector outlet (268), the compressed gas tank (220) and the evaporator outlet (244) being fluidly connected to the ejector inlet (264), wherein the ejector outlet (268) is fluidly connected to the flash tank (270).

9. The method of claim 8, wherein:
the flash tank (270) provides liquid gas to the evaporator inlet (242) and vapor gas to the engine (150).

10. The method of claim 7, further comprising:
operatively passing, using a fan (250), air across the evaporator (240) and into the refrigerated cargo space (119).

11. The method of claim 7, wherein:
the gas is natural gas or propane.

## Patentansprüche

1. Transportkühlsystem (200b), umfassend:
ein Fahrzeug (102) mit einem gekühlten Frachtraum (119);
einen Druckgastank (220), der zum Speichern von Gas konfiguriert ist;
einen Motor (150), der zum Antreiben des Fahrzeugs (102) durch Verbrennung des Gases konfiguriert ist;
einen druckreduzierenden Mechanismus, der den Druckgastank (220) und den Motor (150) fluidisch verbindet, wobei der druckreduzierende Mechanismus dazu konfiguriert ist, den Druck des Gases von dem Druckgastank (220) zu reduzieren;
einen Verdampfer (240), der thermisch mit dem druckreduzierenden Mechanismus und dem gekühlten Frachtraum (119) gekoppelt ist;
wobei der Verdampfer (240) dazu konfiguriert ist, den gekühlten Frachtraum (119) zu kühlen; und
wobei eine Temperatur des Gases und eine Temperatur des Verdampfers (240) infolge der Reduzierung des Gasdrucks durch den druckreduzierenden Mechanismus reduziert sind;
**dadurch gekennzeichnet, dass**
der druckreduzierende Mechanismus aus einem Ejektor-System (259) besteht, wobei das Ejektor-System (259) einen Ejektor (260), der fluidisch mit dem Druckgastank (220) verbunden ist, und einen Flash-Tank (270) umfasst, der fluidisch mit dem Verdampfer (240) und dem Motor (150) verbunden ist.

2. Transportkühlsystem (200b) nach Anspruch 1, wobei:
der Verdampfer (240) einen Verdampfer-Einlass (242) und einen Verdampfer-Auslass (244) beinhaltet, wobei der Flash-Tank (270) fluidisch mit dem Einlass (242) des Verdampfers (240) verbunden ist; und
der Ejektor (260) einen Ejektor-Einlass (264) und einen Ejektor-Auslass (268) beinhaltet, wobei der Druckgastank (220) und der Verdampfer-Auslass (244) fluidisch mit dem Ejektor-Einlass (264) verbunden sind, wobei der Ejektor-Auslass (268) fluidisch mit dem Flash-Tank (270) verbunden ist.

3. Transportkühlsystem (200b) nach Anspruch 2, wobei:
der Flash-Tank (270) dem Verdampfer-Einlass (242) flüssiges Gas und dem Motor (150) dampfförmiges Gas bereitstellt.

4. Transportkühlsystem (200b) nach Anspruch 1, ferner umfassend:
einen Ventilator (250), der zum operativen Leiten von Luft über den Verdampfer (240) und in den gekühlten Frachtraum (119) konfiguriert ist.

5. Transportkühlsystem (200b) nach Anspruch 1, wobei:
das Gas Erdgas ist.

6. Transportkühlsystem (200b) nach Anspruch 1, wobei:
das Gas Propan ist.

7. Verfahren zum Betrieb eines Transportkühlsystems (200b), wobei das Verfahren Folgendes umfasst:
Speichern von Gas in einem Druckgastank (220);
Antreiben eines Fahrzeugs (102) unter Verwendung eines Motors (150), der durch einen druckreduzierenden Mechanismus fluidisch mit dem Druckgastank (220) verbunden ist, wobei der druckreduzierende Mechanismus dazu konfiguriert ist, den Druck des Gases von dem Druckgastank (220) zu reduzieren;
Kühlen eines gekühlten Frachtraums (119) unter Verwendung eines Verdampfers (240), der thermisch mit dem druckreduzierenden Mechanismus und dem gekühlten Frachtraum (119) gekoppelt ist; und
wobei eine Temperatur des Gases und eine Temperatur des Verdampfers (240) infolge der Reduzierung des Gasdrucks durch den druckreduzierenden Mechanismus reduziert werden;
**dadurch gekennzeichnet, dass**
der druckreduzierende Mechanismus aus einem Ejektor-System (259) besteht, wobei das Ejektor-System (259) einen Ejektor (260), der fluidisch mit dem Druckgastank (220) verbunden ist, und einen Flash-Tank (270) umfasst, der fluidisch mit dem Verdampfer (240) und dem Motor (150) verbunden ist.

8. Verfahren nach Anspruch 7, wobei:
der Verdampfer (240) einen Verdampfer-Einlass (242) und einen Verdampfer-Auslass (244) beinhaltet, wobei der Flash-Tank (270) fluidisch mit dem Einlass des Verdampfers (240) verbunden ist; und
der Ejektor (260) einen Ejektor-Einlass (264) und einen Ejektor-Auslass (268) beinhaltet, wobei der Druckgastank (220) und der Verdampfer-Auslass (244) fluidisch mit dem Ejektor-Einlass (264) verbunden sind, wobei der Ejektor-Auslass (268) fluidisch mit dem Flash-Tank (270) verbunden ist.

9. Verfahren nach Anspruch 8, wobei:
der Flash-Tank (270) dem Verdampfer-Einlass (242) flüssiges Gas und dem Motor (150) dampfförmiges Gas bereitstellt.

10. Verfahren nach Anspruch 7, ferner umfassend:
operatives Leiten, unter Verwendung eines Ventilators (250), von Luft über den Verdampfer (240) und in den gekühlten Frachtraum (119).

11. Verfahren nach Anspruch 7, wobei:
das Gas Erdgas oder Propan ist.

## Revendications

1. Système de réfrigération de transport (200b) comprenant :
un véhicule (102) ayant un espace de chargement réfrigéré (119) ;
un réservoir de gaz comprimé (220) configuré pour stocker du gaz ;
un moteur (150) configuré pour alimenter le véhicule (102) par combustion du gaz ;
un mécanisme de réduction de pression reliant fluidiquement le réservoir de gaz comprimé (220) et le moteur (150), le mécanisme de réduction de pression étant configuré pour réduire la pression du gaz provenant du réservoir de gaz comprimé (220) ;
un évaporateur (240) couplé thermiquement au mécanisme de réduction de pression et à l'espace de chargement réfrigéré (119) ;
dans lequel l'évaporateur (240) est configuré pour refroidir l'espace de chargement réfrigéré (119) ; et
dans lequel une température du gaz et une température de l'évaporateur (240) sont réduites en conséquence de la réduction de pression du gaz par le mécanisme de réduction de pression ;
**caractérisé en ce que**
le mécanisme de réduction de pression est composé d'un système éjecteur (259), le système éjecteur (259) comprenant un éjecteur (260) relié fluidiquement au réservoir de gaz comprimé (220) et un réservoir de détente (270) relié fluidiquement à l'évaporateur (240) et au moteur (150).

2. Système de réfrigération de transport (200b) selon la revendication 1, dans lequel :
l'évaporateur (240) comporte une entrée d'évaporateur (242) et une sortie d'évaporateur (244), le réservoir de détente (270) étant relié fluidiquement à l'entrée (242) de l'évaporateur (240) ; et
l'éjecteur (260) comporte une entrée d'éjecteur (264) et une sortie d'éjecteur (268), le réservoir de gaz comprimé (220) et la sortie d'évaporateur (244) étant reliés fluidiquement à l'entrée d'éjecteur (264), dans lequel la sortie d'éjecteur (268) est reliée fluidiquement au réservoir de détente (270).

3. Système de réfrigération de transport (200b) selon la revendication 2, dans lequel
le réservoir de détente (270) fournit du gaz liquide à l'entrée d'évaporateur (242) et du gaz vapeur au moteur (150).

4. Système de réfrigération de transport (200b) selon la revendication 1, comprenant en outre :
un ventilateur (250) configuré pour faire passer de l'air de manière fonctionnelle à travers l'évaporateur (240) et dans l'espace de chargement réfrigéré (119).

5. Système de réfrigération de transport (200b) selon la revendication 1, dans lequel
le gaz est du gaz naturel.

6. Système de réfrigération de transport (200b) selon la revendication 1, dans lequel :
le gaz est du propane.

7. Procédé de fonctionnement d'un système de réfrigération de transport (200b), le procédé comprenant :
le stockage de gaz dans un réservoir de gaz comprimé (220) ;
l'alimentation d'un véhicule (102) à l'aide d'un moteur (150) relié fluidiquement au réservoir de gaz comprimé (220) par l'intermédiaire d'un mécanisme de réduction de pression, le mécanisme de réduction de pression étant configuré pour réduire la pression du gaz provenant du réservoir de gaz comprimé (220) ;
le refroidissement d'un espace de chargement réfrigéré (119) à l'aide d'un évaporateur (240) couplé thermiquement au mécanisme de réduction de pression et à l'espace de chargement réfrigéré (119) ; et
dans lequel une température du gaz et une température de l'évaporateur (240) sont réduites en conséquence de la réduction de pression du gaz par le mécanisme de réduction de pression ;
**caractérisé en ce que**
le mécanisme de réduction de pression est composé d'un système éjecteur (259), le système éjecteur (259) comprenant un éjecteur (260) relié fluidiquement au réservoir de gaz comprimé (220) et un réservoir de détente (270) relié fluidiquement à l'évaporateur (240) et au moteur (150).

8. Procédé selon la revendication 7, dans lequel :
l'évaporateur (240) comporte une entrée d'évaporateur (242) et une sortie d'évaporateur (244), le réservoir de détente (270) étant relié fluidiquement à l'entrée de l'évaporateur (240) ; et
l'éjecteur (260) comporte une entrée d'éjecteur (264) et une sortie d'éjecteur (268), le réservoir de gaz comprimé (220) et la sortie d'évaporateur (244) étant reliés fluidiquement à l'entrée d'éjecteur (264), dans lequel la sortie d'éjecteur (268) est reliée fluidiquement au réservoir de détente (270).

9. Procédé selon la revendication 8, dans lequel :
le réservoir de détente (270) fournit du gaz liquide à l'entrée d'évaporateur (242) et du gaz vapeur au moteur (150).

10. Procédé selon la revendication 7, comprenant en outre :
le passage fonctionnel, à l'aide d'un ventilateur (250), d'air à travers l'évaporateur (240) et dans l'espace de chargement réfrigéré (119).

11. Procédé selon la revendication 7, dans lequel :
le gaz est du gaz naturel ou du propane.
